(19) Europäisches Patentamt / European Patent Office / Office européen des brevets

(11) **EP 4 102 366 B1**

(12) **FASCICULE DE BREVET EUROPEEN**

(45) Date de publication et mention de la délivrance du brevet:
**13.12.2023 Bulletin 2023/50**

(21) Numéro de dépôt: **22178507.4**

(22) Date de dépôt: **10.06.2022**

(51) Classification Internationale des Brevets (IPC):
**G06F 9/50** *(2006.01)* **G01S 13/87** *(2006.01)*

(52) Classification Coopérative des Brevets (CPC):
**G06F 9/5061; G01S 13/878**

(54) **PROCEDE ET DISPOSITIF D'OPTIMISATION DES RESSOURCES CAPTEURS DANS UN SYSTEME MULTI-CAPTEUR**

VERFAHREN UND VORRICHTUNG ZUR OPTIMIERUNG VON SENSORRESSOURCEN EINES MULTISENSORSYSTEMS

METHOD AND DEVICE FOR OPTIMISING THE SENSOR RESOURCES OF A MULTI-SENSOR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2021 FR 2106105**

(43) Date de publication de la demande:
**14.12.2022 Bulletin 2022/50**

(73) Titulaire: **THALES**
**92190 Meudon (FR)**

(72) Inventeurs:
• HERNOUST, Thibault
33700 Merignac (FR)
• GUERRINI, Gilles
33700 Merignac (FR)
• VEYER, Antoine
33700 Merignac (FR)

(74) Mandataire: **Atout PI Laplace**
**Immeuble "Visium"**
**22, avenue Aristide Briand**
**94117 Arcueil Cedex (FR)**

(56) Documents cités:
**EP-A1- 3 331 817 US-A1- 2017 092 220**

• **DE FREITAS ALLAN ET AL: "Response Surface Modeling for Networked Radar Resource Allocation", 2018 21ST INTERNATIONAL CONFERENCE ON INFORMATION FUSION (FUSION), ISIF, 10 juillet 2018 (2018-07-10), pages 1-7, XP033398080, DOI: 10.23919/ICIF.2018.8455815**
• **"Novel Radar Techniques and Applications Volume 2: Waveform Diversity and Cognitive Radar, and Target Tracking and Data Fusion", Institution of Engineering and Technology , 1 octobre 2017 (2017-10-01), pages 157-193, XP055896219, DOI: 10.1049/SBRA512G_ch5 ISBN: 978-1-61353-228-7 Extrait de l'Internet: URL:https://www.researchgate.net/profile/A lexander-Charlish/publication/319880866_Co gnitive_Radar_Management/links/5b0d0061aca 2725783ec63ba/Cognitive-Radar-Management.p df**

EP 4 102 366 B1

# Description

## Domaine technique :

L'invention concerne de manière générale le domaine des capteurs et en particulier un procédé et un dispositif de contrôle de l'utilisation des capteurs d'un système multi-capteur.

Les systèmes multi-capteurs sont équipés d'un ensemble de capteurs, souvent hétérogènes, fournissant des informations au système. Un système multi-capteur utilise les différentes informations délivrées par les différents capteurs pour exécuter des fonctions du système, comme par exemple des fonctions de contrôle du fonctionnement du système multi-capteur ou des fonctions propres aux missions du système multi-capteur.

Dans les solutions existantes, un opérateur responsable de la gestion du système doit à chaque demande opérationnelle, liée à une fonction du système, choisir des capteurs du système pour répondre à la demande opérationnelle. Généralement, l'opérateur choisit le sous-ensemble de capteurs qui permet d'obtenir un résultat le plus rapidement possible. Cependant, dans les cas où les ressources capteurs sont déjà très sollicitées, il arrive que l'opérateur choisisse des moyens moins classiques pour répondre à la demande. Par exemple, si le système utilise un capteur de type RADAR et qu'un tel capteur RADAR a fait une détection 3D et est très surchargé, l'opérateur peut recourir à une reconstruction d'une localisation 3D à partir d'information 2D obtenues par d'autres capteurs. Dans certaines situations, l'opérateur peut même se retrouver dans l'incapacité de répondre à certaines demandes très spécifiques en raison de l'indisponibilité d'un ou plusieurs capteurs, si ces capteurs sont surchargés et sont les seuls à pouvoir répondre à la demande (par exemple incapacité d'identifier pour un système de détection de cible de détecter une cible d'intérêt si le capteur optronique, qui est le seul à pouvoir remplir ce type d'action dans le système, est déjà surchargé).

Classiquement, pour gérer les ressources capteurs du système en fonction de la demande, l'opérateur responsable de la gestion des ressources capteurs doit prendre des décisions pour utiliser les ressources capteurs disponibles au mieux de leurs capacités, en anticipant en permanence les conséquences de ses décisions, sur la base de ses connaissances expérimentales et de son expertise.

Ainsi, les solutions actuelles d'optimisation des ressources capteurs reposent sur la sélection faite par l'opérateur, sur la base de ses connaissances. Ce type de solution a été décrit par exemple dans Sensor Management for Radar Networks Klemm, Richard; Griffiths, Hugh; Koch, Wolfgang: Novel radar techniques and applications. Vol.2: Waveform diversity and cognitive radar, and target tracking and data fusion Herts: SciTech Publishing, 2017 (DOI: 10.1049/SBRA512G_ch15) qui traite de l'optimisation des ressources dans un réseau de capteurs non hétérogènes.

Le document US 2017/092220 propose de palier au défaut d'un capteur par l'identification et l'utilisation d'un capteur équivalent.

Le document EP 3 331817 propose non pas de substituer un capteur à un autre mais d'utiliser les données d'un capteur disponible.

Le document "Response Surface Modeling for Networked Radar Resource Allocation" de Allan de Freitas et al, publié le 10-07-1998 à 21 st International Conférence on Information Fusion, décrit un système d'optimisation des ressources de capteurs reposant sur une sélection faite par un opérateur.

Cependant, de telles solutions sont coûteuses et requièrent un niveau d'expertise important de la part de l'opérateur. Elles limitent en outre l'interchangeabilité des opérateurs. Par ailleurs, l'opérateur peut avoir d'autres responsabilités de contrôle du système embarquant les ressources capteurs (pilote d'un avion par exemple). La processus de sélection des ressources capteurs disponibles par l'opérateur peut requérir une forte monopolisation de l'opérateur, de manière constante, ce qui peut nuire à l'efficacité du contrôle général du système ou peut inversement impliquer une utilisation sous-optimale des ressources capteurs.

## Définition générale de l'invention :

L'invention vient améliorer la situation en proposant un dispositif de contrôle d'utilisation de capteurs d'un système, le système étant équipé de plusieurs capteurs comprenant au moins deux capteurs, le système étant apte à exécuter une ou plusieurs fonctions de système. Avantageusement, le dispositif comprend :

**[0011]** - une unité de présélection d'alternatives d'utilisations de capteurs configurée pour présélectionner un ensemble d'alternatives d'utilisation de capteurs à partir d'alternatives d'utilisation de capteurs stockées dans une base de données d'alternatives, en réponse à la réception d'une requête indiquant un type de fonction du système et au moins une métrique de qualité, chaque alternative étant stockée dans la base de données d'alternatives en correspondance avec une fonction de système, chaque alternative étant associée à au moins un capteur et comprenant pour chaque capteur associé, un taux d'utilisation du capteur et une durée d'utilisation du capteur audit taux d'utilisation, l'unité de présélection étant configurée pour extraire les alternatives d'utilisation de capteurs associée à la fonction de système de la base de données :

- une unité de calcul d'indicateur d'impact d'alternative configurée pour calculer un indicateur d'impact d'alternative pour chaque alternative présélectionnée, l'indicateur d'impact représentant l'impact de l'utilisation de chaque capteur de l'alternative, au taux d'utilisation et pendant la durée associés au capteur dans l'alternative d'utilisation de capteurs, pour répondre à la fonction de système spécifiée dans la requête ; et

- une unité de sélection d'alternative configurée pour sélectionner une alternative parmi lesdites alternatives présélectionnées en fonction de l'indicateur d'impact déterminé pour chaque alternative.

Dans un mode de réalisation, l'unité de calcul d'indicateur d'impact d'alternative comprend une unité de calcul d'indicateur d'impact élémentaire configurée pour calculer pour chaque capteur de l'alternative, un indicateur d'impact élémentaire représentant l'impact de l'utilisation du capteur de l'alternative, au taux d'utilisation et pendant la durée associés au capteur, pour répondre à la fonction de système spécifiée dans la requête, l'unité de calcul de l'indicateur d'impact d'alternative comprenant en outre un additionneur configuré pour additionner les indicateurs d'impact élémentaires calculés pour tous les capteurs de l'alternative, ce qui fournit l'indicateur d'impact d'utilisation de l'alternative.

L'unité de calcul d'indicateur d'impact d'alternative peut être configurée pour calculer au moins deux facteurs relatifs à l'utilisation du capteur à partir de la durée associée au capteur et/ou du taux d'utilisation du capteur, l'unité de calcul comprenant un multiplicateur pour calculer le produit des facteurs, ce qui fournit l'indicateur d'impact élémentaire du capteur.

Dans un mode de réalisation, l'unité de calcul d'indicateur d'impact d'alternative peut comprendre une unité de calcul de facteur de durée d'utilisation configurée pour calculer un facteur de durée d'utilisation du capteur à partir de la durée d'utilisation associée au capteur dans l'alternative.

L'unité de calcul de facteur de durée d'utilisation peut être configurée pour calculer le facteur de durée d'utilisation du capteur comme étant égal au produit de la durée d'utilisation associée au capteur dans l'alternative et d'une constante, la constante étant identique pour tous les capteurs de l'alternative associée au capteur.

Dans un mode de réalisation, l'unité de calcul d'indicateur d'impact élémentaire peut comprendre une unité de calcul de facteur de charge de capteur configurée pour calculer un facteur de charge du capteur à partir d'un coefficient de charge du capteur et du taux d'utilisation associé au capteur dans l'alternative.

En particulier, l'unité de calcul de facteur de charge du capteur (1201) peut être configurée pour calculer le facteur de charge du capteur $F(n, C)$ selon l'équation :

$$F(n, C) = \int_{x=0}^{n} coef(C + x),$$

C désignant le coefficient de charge du capteur et $n$ désignant le taux d'utilisation associé au capteur dans l'alternative.

La durée d'utilisation du capteur peut être définie à partir d'une date t, tandis que l'unité de calcul d'indicateur d'impact élémentaire comprend une unité de calcul de criticité de capteur configurée pour calculer un facteur de criticité du capteur représentant une valeur prédite de la criticité du capteur à la date t en fonction de l'état de l'environnement du capteur à la date t.

L'unité de calcul de criticité de capteur peut être configurée pour calculer le facteur de criticité du capteur en utilisant une technique d'analyse de l'environnement du capteur estimé à la date t, le facteur de criticité du capteur représentant une probabilité d'utilisation de la ressource au vu de l'état de l'environnement du capteur à l'instant t, le facteur de criticité étant une valeur comprise entre une valeur minimale de criticité indiquant que le capteur est une ressource optionnelle et une valeur maximale de criticité indiquant que le capteur représente une ressource nécessaire.

Dans un mode de réalisation, la technique d'analyse peut être basée sur une logique booléenne ou une technique à base d'intelligence artificielle.

Dans des modes de réalisation, l'unité de sélection d'alternative peut être configurée pour sélectionner l'alternative qui minimise l'indicateur d'impact parmi les alternatives présélectionnées.

Dans un mode de réalisation, chaque métrique de qualité spécifiée dans la requête peut être associée à un niveau de priorité.

Le dispositif de contrôle d'utilisation de capteurs peut comprendre un module de calcul de poids d'utilité configuré pour calculer, pour chaque alternative présélectionnée, un poids d'utilité à partir des niveaux de priorité associés à chaque métrique de qualité spécifiée dans la requête et de valeurs prédites des métriques de qualité calculées pour l'alternative, l'unité de sélection d'alternative étant configurée pour sélectionner l'alternative qui minimise le ratio entre l'indicateur d'impact d'une alternative et le poids d'utilité de l'alternative, parmi les alternatives présélectionnées.

Il est en outre proposé un procédé de contrôle d'utilisation de capteurs d'un système, le système étant équipé de plusieurs capteurs comprenant au moins deux capteurs, le système étant apte à exécuter une ou plusieurs fonctions de système. Avantageusement, le procédé comprend les étapes consistant à :

- présélectionner un ensemble d'alternatives d'utilisation de capteurs à partir d'alternatives d'utilisation de capteurs stockées dans une base de données d'alternatives, en réponse à la réception d'une requête indiquant un type de fonction du système et au moins une métrique de qualité, chaque alternative étant stockée dans la base de données d'alternatives en correspondance avec une fonction de système, chaque alternative étant associée à au moins un capteur et comprenant pour chaque capteur associé, un taux d'utilisation du capteur et une durée d'utilisation du capteur audit taux d'utilisation, l'étape de présélection comprenant une extraire des alternatives d'utilisation de capteurs associée à la fonction de système dans la base de données ;

- calculer un indicateur d'impact d'alternative pour chaque alternative présélectionnée, l'indicateur d'impact représentant l'impact de l'utilisation de chaque capteur de l'alternative, au taux d'utilisation et pendant la durée associés au capteur dans l'alternative de capteur, pour répondre à la fonction de système spécifiée dans la requête ; et

- sélectionner une alternative parmi lesdites alternatives présélectionnées en fonction de l'indicateur d'impact déterminé pour chaque alternative.

**Brève description des figures :**

D'autres caractéristiques, détails et avantages de l'invention ressortiront à la lecture de la description faite en référence aux dessins annexés donnés à titre d'exemple et qui représentent, respectivement :

- La figure 1 représente un système multi-capteur, selon certains modes de réalisation ;

- La figure 2 représente un dispositif de contrôle d'utilisation des capteurs du système, selon certains modes de réalisation ;

- La figure 3 représente un exemple d'implémentation de l'unité de calcul d'indicateur d'impact, selon un mode de réalisation;

- La figure 4 représente un exemple d'implémentation de l'unité de calcul d'indicateur d'impact élémentaire de capteur, selon un mode de réalisation;

- La figure 5 est un diagramme représentant un exemple de fonction de coefficient de charge;

- La figure 6 représente l'unité de présélection du dispositif de contrôle d'utilisation des capteurs du système, selon certains modes de réalisation ; et

- La figure 7 est un organigramme représentant un procédé de contrôle d'utilisation des capteurs du système selon certains modes de réalisation.

**Description détaillée de l'invention :**

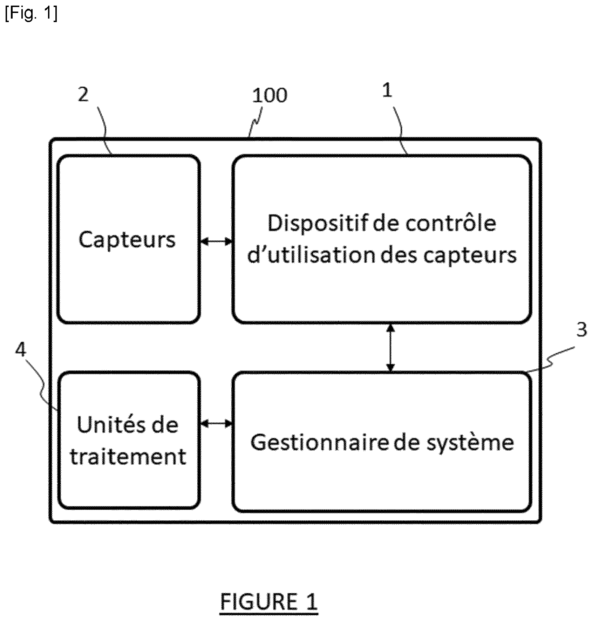

La figure 1 représente un système multi-capteurs 100 selon des modes de réalisation de l'invention.
Le système multi-capteur 100 comprend un ensemble de capteurs 2, chaque capteur 2 étant configuré pour effectuer des mesures et pour fournir en sortie ces mesures au système multi-capteur 100. Le système multi-capteur 100 est configuré pour mettre en oeuvre un ensemble de fonctions (encore appelées 'fonctions de systèmes'). Les fonctions de système peuvent être par exemple un service fourni par le système multi-capteur 100.

Le système multi-capteur 100 peut être tout type de système embarquant une pluralité de capteurs 2 (au moins deux capteurs) et utilisant les données relevées par les capteurs 2 pour exécuter des fonctions du système.

Le système multi-capteur 100 peut évoluer dans des environnements dynamiques.

Le système multi-capteur 100 peut être mobile ou statique.

Les capteurs 2 du système multi-capteur 100 peuvent comprendre un ensemble de capteurs hétérogènes (capteurs de types différents) ou homogènes (de même type). Par exemple le système multi-capteur 100 peut inclure des capteurs RADAR, LIDAR, Caméra, etc.

Le système multi-capteur 100 peut être par exemple, et sans limitation, un système aérien (avion), un système aéroporté (drone), un système aéronautique ou spatial, un système naval (bâtiment de surface), un système sous-marin, un véhicule automatisé ou semi-automatisé, etc.

Le système multi-capteur 100 peut être un système comprenant des sous-systèmes de différents types (par exemple un système aéroporté, un système terrestre et un système naval), tel qu'un système collaboratif.

Le système multi-capteur 100 comprend avantageusement un dispositif de contrôle 1 d'utilisation des capteurs configuré pour contrôler l'utilisation des capteurs 2 du système multi-capteur 100.

Le dispositif de contrôle 1 est configuré pour sélectionner dynamiquement et en temps réel une combinaison de capteurs 2 à utiliser en réponse à une demande de ressources capteurs (encore appelée ci-après « demande opérationnelle » ou « requête ») parmi les capteurs 2 disponibles. La demande opérationnelle est associée à au moins une fonction du système (fonction de système demandée). Dans un mode de réalisation, la demande opérationnelle comprend un paramètre indiquant un type de fonction du système multi-capteur. La demande opérationnelle comprend en outre au moins une métrique de qualité. La demande opérationnelle représente une requête d'exécution de fonction de système (par exemple demande de fonction de détection) nécessitant des données issues de capteurs du système 100.

Le système multi-capteur 100 peut comprendre un gestionnaire de système 3 configuré pour requérir l'utilisation des capteurs 2 du système, en utilisant l'information de sélection de capteur(s) déterminée par le dispositif de contrôle 1.

Le gestionnaire de système 3 peut notamment contrôler l'exécution de la fonction associée à la demande opérationnelle reçue en utilisant l'information fournie par le dispositif de contrôle 1 d'utilisation de capteurs 2. Le gestionnaire de système 3 peut ainsi lancer l'exécution de la fonction associée à la demande opérationnelle à partir des données mesurées par les capteurs sélectionnés par le dispositif de contrôle 1.

Les fonctions de système mises en oeuvre par le système multi-capteur 100 peuvent inclure différentes fonctions du système 100, telles que par exemple et sans limitation des fonctions dédiées au fonctionnement propre du système (fonction de conduite), des fonctions destinées à garantir la sécurité du système (fonction de contrôle) ou des fonctions relatives à des missions du système (par exemple, fonction de détection d'objet).

Les fonctions de système peuvent être exécutées par une ou plusieurs unités de traitement 4, en utilisant les données retournées pas les capteurs sélectionnées par le dispositif de contrôle 1.

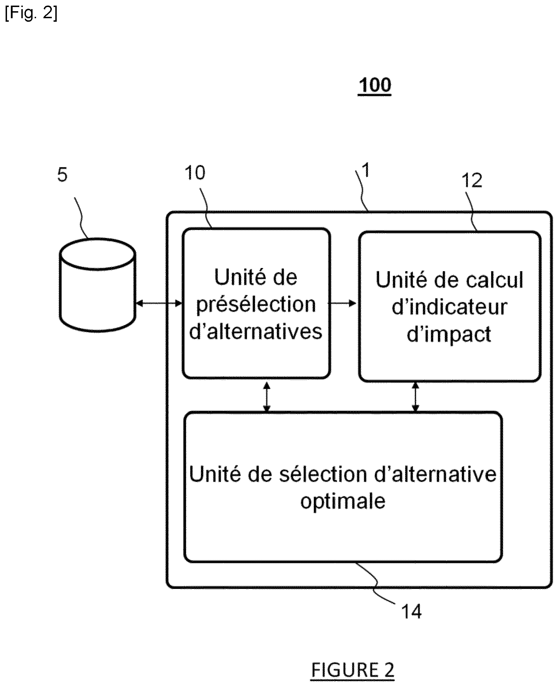

La figure 2 est un diagramme représentant le dispositif de contrôle d'utilisation des capteurs 1, selon certains modes de réalisation.

Le dispositif de contrôle 1 comprend une unité de présélection d'alternatives d'utilisation de capteurs 10 configurée pour présélectionner un ensemble de L alternatives d'utilisation de capteurs à partir d'alternatives d'utilisation de capteurs stockées dans une base de données 5, en réponse à la réception d'une demande opérationnelle (ou 'requête') indiquant un type de fonction du système et au moins une métrique de qualité. La base de données d'alternatives 5 peut être stockée dans le système 100 à partir d'informations reçues de sources externes ou prédéterminées par le dispositif de contrôle 1.

Chaque alternative de capteur est stockée dans la base de données d'alternatives en correspondance avec une fonction de système, chaque alternative étant associée à au moins un capteur et comprenant pour chaque capteur associé à l'alternative :

- un taux d'utilisation $n$ du capteur (encore appelé 'taux de charge'), par exemple exprimé en pourcentage ($n$%) de la capacité totale du capteur ; et

- une durée d correspondant à une durée d'utilisation du capteur pour réaliser l'alternative (durée d'utilisation des $n$% du capteur).

Telle qu'utilisée ici, une alternative d'utilisation de capteurs correspond ainsi à un ensemble de capteurs comprenant au moins un capteur et pour chaque capteur de l'ensemble de capteurs, un taux d'utilisation $n$ et une durée d'utilisation d. Une alternative de capteurs désigne ainsi un capteur ou une combinaison de capteurs 2 pouvant être utilisée pour la mise en oeuvre de la fonction de système, au taux de charge $n$ et pendant la durée d associés à chaque capteur. Le dispositif de contrôle 1 permet ainsi de déterminer une alternative de capteurs à utiliser pour la mise en oeuvre de la fonction de système, la fonction de système étant alors exécutée en utilisant les données des capteurs de l'alternative sélectionnée, chaque capteur 2 étant utilisé au taux de charge $n$ et pendant la durée $d$ associés

La durée d peut être définie à partir d'une date $t$ (durée d'utilisation de l'ensemble de capteurs à partir de la date $t$).

Un capteur d'une alternative d'utilisation de capteurs peut comprendre une valeur fixe pour le taux d'utilisation $n$ qui lui est associé et/ou pour la durée $d$ qui lui est associée. En variante, un capteur d'une alternative d'utilisation de capteurs peut comprendre une plage de valeurs pour le taux d'utilisation $n$ qui lui est associé et/ou pour la durée $d$ qui lui est associée. Selon cette variante de réalisation, l'unité de présélection 10 peut être configurée pour sélectionner au préalable, pour le capteur, une valeur fixe dans la plage de valeurs définie pour le taux d'utilisation et/ou pour la durée associée au capteur avant la détermination de valeurs prédites de métriques de qualité pour le capteur.

L'unité de présélection 10 est configurée pour extraire initialement les alternatives d'utilisation de capteurs associée à la fonction de système indiquée dans la demande opérationnelle et présélectionner au moins certaines des alternatives en fonction de un ou plusieurs critères de sélection.

Le dispositif de contrôle de l'utilisation de capteurs 1 peut comprendre en outre une unité de calcul d'indicateur d'impact d'alternative 12 configurée pour calculer un indicateur d'impact d'alternative $I_k$ pour chaque alternative $A_k$ présélectionnée. L'indicateur d'impact $I_k$ d'une alternative représente l'impact de l'utilisation de tous les capteurs de l'alternative $A_k$, chacun au taux d'utilisation $n$ et pendant la durée $d$ associée au capteur dans l'alternative de capteur, pour répondre à la fonction de système spécifiée dans la requête.

Le dispositif de contrôle d'utilisation de capteurs 1 comprend en outre une unité de sélection d'alternative 14 configurée pour sélectionner une alternative $A_{k_{opt}}$ parmi les alternatives présélectionnées en fonction de l'indicateur d'impact déterminé pour chaque alternative.

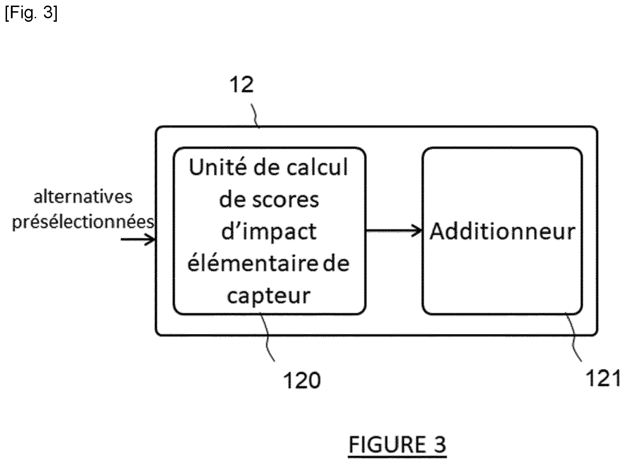

La figure 3 est un schéma représentant l'unité de calcul d'indicateur d'impact d'alternative 12, selon certains modes de réalisation. Dans de tels modes de réalisation, l'unité de calcul d'indicateur d'impact d'alternative 12 comprend une unité de calcul d'indicateur d'impact élémentaire 120 configurée pour calculer, pour chaque alternative $A_k$ et pour chaque capteur $C_{jk}$ de l'alternative, un indicateur d'impact élémentaire $I_{jk}$ représentant l'impact de l'utilisation du capteur $C_{jk}$ de l'alternative, au taux d'utilisation $n$ et pendant la durée $d$ associée au capteur dans l'alternative de capteur, pour répondre à la fonction de système spécifiée dans la requête. L'indicateur d'impact élémentaire $I_{jk}$ d'un capteur $C_{jk}$ représente ainsi une notation de l'impact de l'utilisation de n% du capteur $C_{jk}$ pendant $d$ secondes à la date $t$.

L'unité de calcul de l'indicateur d'impact d'alternative 12 peut comprendre en outre un additionneur 121 configuré pour additionner les indicateurs d'impact élémentaires $I_{jk}$ déterminés pour tous les capteurs de l'alternative, ce qui fournit l'indicateur d'impact $I_k$ d'utilisation de l'alternative. L'indicateur d'impact $I_k$ d'une alternative

$A_k$ est ainsi défini par :

$$I_k = \sum_{j=1}^{N_k} I_{jk} \quad (1)$$

Dans l'équation (1), $N_k$ désigne le nombre de capteurs $C_{jk}$ de l'alternative $A_k$.

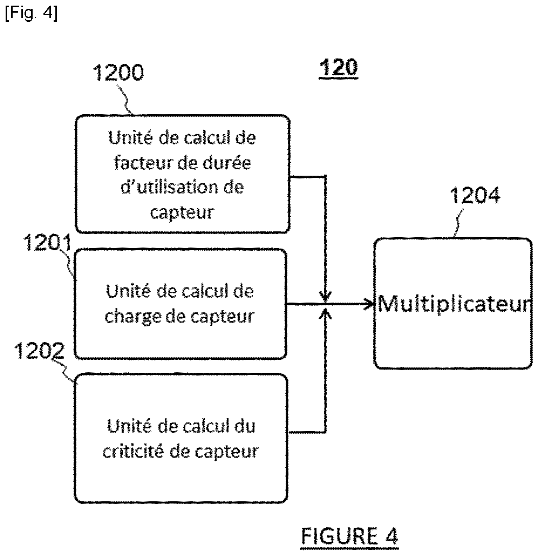

La figure 4 est un schéma représentant l'unité de calcul d'indicateur d'impact élémentaire de capteur 120, selon certains modes de réalisation.

Dans de tels modes de réalisation, l'unité de calcul d'indicateur d'impact élémentaire 120 est configurée pour calculer, pour chaque capteur $C_{jk}$ d'une alternative $A_k$ ($1 \le j \le N_k$) au moins deux facteurs relatifs à l'utilisation du capteur $C_{jk}$ à partir de la durée $d$ associée au capteur et/ou du taux de charge $n$ associée au capteur. L'unité de calcul comprend en outre un multiplicateur 1204 configuré pour calculer le produit des facteurs relatifs à l'utilisation du capteur $C_{jk}$, ce qui fournit l'indicateur d'impact élémentaire $I_{jk}$ du capteur.

Dans un mode de réalisation, l'unité de calcul de l'indicateur d'impact élémentaire 120 comprend une unité de calcul de facteur de durée d'utilisation 1200 configurée pour calculer un facteur de durée d'utilisation du capteur $f(d)$ à partir de la durée d'utilisation $d$ associée au capteur dans l'alternative. Le facteur de durée d'utilisation du capteur $f(d)$ représente l'impact de l'utilisation d'un capteur $C_{jk}$ de l'alternative $A_k$ pendant la durée $d$.

La durée d'utilisation $d$ d'un capteur pour réaliser l'alternative $A_k$ permet ainsi de représenter le fait que plus le capteur est monopolisé longtemps, plus cela a un impact sur les capacités du système 100.

Dans un mode de réalisation, le facteur de durée d'utilisation peut être considéré comme linéaire. Dans un tel mode de réalisation, le facteur de durée d'utilisation $l(d)$ du capteur $C_{jk}$ peut être calculé en faisant le produit de la durée d'utilisation d associée au capteur dans l'alternative et d'une constante $K$, selon l'équation (2) :

$$f(d) = K \times d \quad (2)$$

La constante $K$ peut être identique pour tous les capteurs $C_{jk}$ de l'alternative $A_k$. Dans un mode de réalisation, la constante $K$ peut être identique pour tous les capteurs 2 du système 100.

L'unité de calcul d'indicateur d'impact élémentaire 120 peut comprendre en outre une unité de calcul de facteur de charge de capteur 1201 configurée pour calculer un facteur de charge du capteur $F(n, C)$ à partir d'un coefficient de charge $C$ du capteur et du taux d'utilisation $n$ associé au capteur $C_{jk}$ dans l'alternative. Le coefficient de charge $C$ du capteur a la même unité que le taux de charge du capteur. Il peut être exprimé en pourcentage. Le coefficient de charge $C$ du capteur représente ainsi la charge du capteur ($C\%$) avant l'utilisation des $n\%$. Le facteur de charge du capteur $F(n, C)$ représente ainsi l'impact de l'utilisation des $n\%$ du capteur $C_{jk}$ en fonction de la charge du capteur ($C\%$). Le facteur de charge du capteur $F(n, C)$ dépend ainsi du taux de charge du capteur $n$ associé au capteur dans l'alternative $A_k$ et de la charge du capteur ($C\%$) avant l'utilisation des $n\%$.

Le facteur de charge du capteur $F(n, C)$ permet ainsi de tenir compte du fait que moins un capteur a de bande passante disponible, moins il est susceptible de pouvoir répondre aux demandes opérationnelle futures. Par exemple, dans un cas extrême, si un capteur donné n'a plus de bande passante disponible, le système 100 sera dans l'impossibilité de répondre à des demandes opérationnelles pour lesquelles toutes les alternatives ont besoin de ce capteur en particulier.

Un coefficient $coef(x)$ est donné à chaque valeur de la charge $x$ d'un capteur, avec $x$ compris entre une valeur minimale de charge (par exemple 0) et une valeur maximale de charge (par exemple 100) d'un capteur, $coef(x)$ étant une fonction croissante quand x est croissant.

Dans un mode de réalisation, le facteur de charge du capteur $F(n, C)$ est calculé selon l'équation (3) :

$$F(n, C) = \int_{x=0}^{n} coef(C + x) \quad (3)$$

Le facteur de charge $F(n, C)$ peut ainsi être utilisé comme facteur multiplicatif pour la consommation de $n\%$ d'un capteur chargé à $C\%$.

L'unité de calcul d'indicateur d'impact élémentaire 120 peut en outre comprendre une unité de calcul de criticité de capteur 1202 configurée pour calculer un facteur de criticité du capteur $f_{crit}$ représentant une valeur prédite de la criticité $C_{jk}$ du capteur à la date t en fonction de l'état de l'environnement du capteur à la date t.

Le calcul mis en oeuvre par l'unité de calcul de criticité de capteur 1202 pour déterminer le facteur de criticité $f_{crit}$ d'un capteur du capteur $C_{jk}$ dépend du type de capteur, la prévision de la criticité du capteur à la date t du capteur est spécifique à chaque capteur.

Le calcul mis en oeuvre par l'unité de calcul de criticité de capteur 1202 peut reposer sur une technique d'analyse de l'environnement du capteur implémentée en utilisant un ou plusieurs algorithmes d'analyse d'environnement de capteur.

Dans un mode de réalisation, le calcul mis en oeuvre par l'unité de calcul de criticité de capteur 1202 pour déterminer le facteur de criticité $f_{crit}$ d'un capteur du capteur $C_{jk}$ dépend du type de capteur, la prévision de la criticité du capteur à la date t du capteur étant spécifique à chaque capteur.

En particulier, le facteur de criticité du capteur $f_{crit}$ peut être calculé en utilisant une technique d'analyse de l'environnement du capteur estimé à la date t. Le facteur de criticité d'un capteur représente une probabilité d'utilisation de la ressource au vu de l'état de l'environnement à l'instant t. Le facteur de criticité du capteur est une valeur comprise entre une valeur minimale de criticité (par exemple proche de 0) indiquant que le capteur $C_{jk}$ est une ressource optionnelle et une valeur maximale de criticité (par exemple 100) indiquant que le capteur $C_{jk}$ représente une ressource nécessaire. Plus la valeur du facteur de criticité est proche de 0 plus sa probabilité d'utilisation (au vu de l'environnement à l'instant t) est faible. Plus le facteur de criticité a une valeur élevée, plus l'utilisation de la ressource est probable. Dans le cas d'une valeur élevée du facteur de criticité, l'utilisation de ressources de criticité inférieure (et donc de probabilité d'utilisation plus faible) peut être privilégiée, lorsque le choix est possible pour répondre à une demande opérationnelle.

La technique d'analyse permet ainsi d'estimer entre la valeur de criticité minimale et la valeur de criticité maximale à quel point le capteur sera critique dans l'environnement du capteur estimé à la date t.

La technique d'analyse utilisée pour estimer le facteur de criticité d'un capteur $C_{jk}$ peut être basée sur une logique booléenne ou une technique à base d'intelligence artificielle (par exemple et sans limitation une technique à base de logique floue ou de réseaux de neurones).

Par exemple, dans un exemple d'application de l'invention à un système 100 de détection de cible, pour un capteur de type caméra :

- si à la date *t*, dans l'environnement du capteur, il est estimé qu'aucune cible d'intérêt ne sera à sa portée, son facteur de criticité sera égal à la valeur de criticité minimale 0 ; et

- si à la date *t*, il est estimé dans l'environnement du capteur qu'un nombre de cibles d'intérêts équivalent à sa capacité maximale d'analyse seront à sa portée, sa criticité sera proche de la valeur maximale de criticité (par exemple 100).

L'unité de calcul d'impact élémentaire peut alors déterminer l'indicateur d'impact élémentaire $I_{jk}$ du capteur $C_{jk}$ en effectuant le produit du facteur de durée d'utilisation *f(d)*, du facteur de charge du capteur *F(n, C)*, et du facteur de criticité $f_{crit}$.

Le facteur de criticité fournit ainsi une prévision de la criticité du capteur $C_{jk}$ à la date t en fonction de l'environnement dans lequel il évoluera à cette date.

Les modes de réalisation de l'invention permettent ainsi de de transformer une demande opérationnelle en un ensemble d'alternatives d'utilisation des capteurs du système permettant de répondre à la demande et de sélectionner une liste d'alternatives candidate en fonction de l'utilité (ou plus-value) apporté au système par chaque alternative.

L'unité d'évaluation de l'impact opérationnel de chaque alternative 12 permet de comparer chacune des alternatives de capteurs présélectionnées pour répondre à la demande opérationnelle en associant un indicateur d'impact $I_k$ à chaque alternative $A_k$ parmi les alternatives présélectionnées, en fonction de l'impact opérationnel de l'alternative $A_k$ estimé sur le système 100. Un tel impact opérationnel sur le système 100 d'une alternative $A_k$ représente le point jusqu'auquel l'alternative de capteur $A_k$ impacterait les capacités du système 100 à répondre aux demandes opérationnelles qui lui parviendraient par la suite, si l'alternative de capteur $A_k$ était sélectionnée et mise en oeuvre pour répondre à la demande opérationnelle.

L'unité de sélection d'alternative 14 permet de sélectionner la meilleure des alternatives de capteurs présélectionnées en fonction de l'indicateur d'impact, c'est à dire celle qui minimise l'impact opérationnel des alternatives.

Dans un mode de réalisation, l'unité de sélection d'alternative 14 peut être configurée pour sélectionner l'alternative optimale $A_{k_{opt}}$ tel que :

$$A_{k\,opt} = \min_{k=1\, \text{à}\, L} I_k$$

Les modes de réalisation de l'invention permettent ainsi d'optimiser les capacités des ressources capteurs selon 3 axes :

- Le facteur de criticité permet une réservation de la disponibilité du capteur. Il permet de réserver la disponibilité d'un capteur pour une future utilisation en fonction d'un critère de criticité dépendant de la spécificité de la ressource, plus les spécificités de la ressources étant susceptibles d'être utilisées dans la situation courante, plus sa disponibilité est réservée ;

- Le facteur de charge de capteur permet une réservation de capacité. Il permet de réserver une partie de la capacité d'un capteur pour une future utilisation, quelle que soit la spécificité de la ressource et sa criticité, une ressource sans capacité disponible rendant impossible la réponse aux demandes opérationnelles nécessitant les spécificités de cette ressource ; et

- Le facteur de durée d'utilisation permet une limitation de la durée d'utilisation. Il permet d'éviter une utilisation trop longue d'un capteur, plus un capteur devant être utilisé longtemps pour répondre à une demande opérationnelle, plus l'impact opérationnel prévisionnel augmentant. Il permet notamment d'éviter l'interruption de tâches en cours.

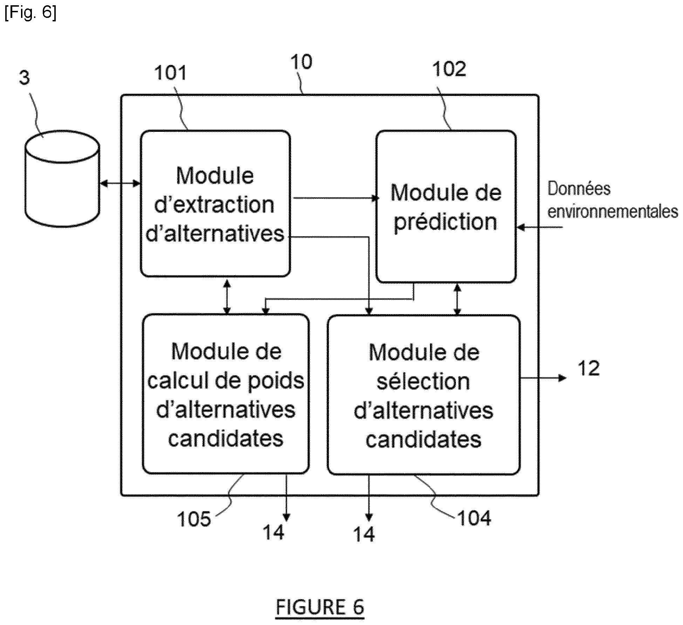

La figure 6 est un schéma représentant la structure de l'unité de présélection d'alternatives 10 selon des modes de réalisation de l'invention.

Dans de tels modes de réalisation, l'unité de présélection 10 comprend un module d'extraction 101 configuré pour extraire des alternatives de la base données en réponse à la demande opérationnelle et un module de prédiction 102 comprenant un ensemble de modèles de performance de capteur 1020, chaque modèle de performance de capteur étant associé à un capteur. Le module de prédiction 102 est configuré pour appliquer à chaque alternative de capteurs extraite de la base de données 5 et, pour chaque capteur associé à l'alternative, le modèle de performance de capteur correspondant au capteur. Le modèle de performance de capteur associé à un capteur est configuré pour fournir, pour un taux d'utilisation n et une durée du capteur d, une valeur prédite pour chaque métrique de qualité spécifiée dans la demande opérationnelle, si l'utilisation de l'alternative est possible pour atteindre les valeurs cibles des métriques de qualité. La valeur prédite correspond à la valeur estimée de la métrique de qualité pour une utilisation du capteur au taux d'utilisation n et pendant la durée d associée au capteur dans l'alternative. Le module de prédiction 102 peut fournir ainsi pour une alternative d'utilisation de capteur extraite de la base de données 5 et, pour chaque capteur de l'alternative de capteur, une valeur prédite pour chaque métrique de qualité spécifiée dans la demande opérationnelle.

L'unité de présélection d'alternatives 10 peut en outre comprendre une unité de sélection d'alternatives candidates 104 configurée pour sélectionner au moins certaines des alternatives d'utilisation de capteurs extraites en fonction des valeurs prédites des métriques de qualité pour les capteurs de chaque alternative. Le module de sélection d'alternative candidates 104 peut par exemple être configuré pour sélectionner un sous-ensemble de L alternatives parmi toutes les alternatives de capteurs extraites de la base de données 5. Les alternatives candidates sélectionnées peuvent être délivrées en sortie de l'unité de présélection 10.

Les métriques de qualité indiquée dans la demande opérationnelle peuvent comprendre une ou plusieurs métriques de qualité correspondant aux métriques de qualité à respecter pour répondre à la demande opérationnelle (métriques de qualité devant être satisfaites en réponse à l'exécution de la fonction de système). Chaque métrique de qualité spécifiée dans la demande opérationnelle peut être associée à une valeur cible ou à une plage de valeurs représentant les valeurs minimales devant être atteintes par les métriques de qualité, en réponse à l'exécution de la fonction de système.

Dans une application de l'invention à un système multi-capteur de détection d'objet ou de cible 100, les métriques de qualité peuvent par exemple comprendre une métrique de précision, une métrique de rapidité de résultat, une métrique de zone couverte, et/ou une métrique de discrétion.

Dans un mode de réalisation, la demande opérationnelle peut en outre comprendre un niveau de priorité associé à chaque métrique de qualité.

En variante, le niveau de priorité associé à chaque métrique de qualité peut être prédéterminé en utilisant une table de sélection de priorité. Dans un tel mode de réalisation, le dispositif de contrôle d'utilisation de capteurs 1 peut comprendre une table de sélection de priorité associant pour chaque fonction du système, un niveau de priorité à chaque métrique de qualité, le dispositif étant configuré pour déterminer le niveau de priorité de chaque métrique de qualité à partir de la table de sélection de priorité, pour la fonction de système spécifiée dans la requête.

Dans un mode de réalisation, le dispositif de contrôle d'utilisation de capteurs 1 peut être configuré pour convertir la valeur ou chaque valeur extrême de la plage de valeurs associée à chaque métrique de qualité en une valeur ayant un format cible, en utilisant une table de conversion spécifique au type de fonction de système indiqué dans la demande opérationnelle. Une telle conversion permet par exemple de convertir les valeurs des métriques de précision en des valeurs banalisées. Par exemple, pour un type de fonction de système demandée correspondant à un suivi de détection air, une métrique de précision de détection de 100 mètres spécifiée dans la demande opérationnelle peut être transformée en une valeur égale à 3/5 pour la métrique de précision (la métrique de précision est ainsi mise à la valeur 3/5).

Dans un mode de réalisation, l'unité de présélection 10 peut en outre comprendre un module de calcul de poids d'alternative 105 configuré pour calculer un poids d'utilité $w_k$ (encore appelé « score d'utilité ») pour chaque alternative $A_k$ extraite de la base de données 5 sur le système 100. Le poids d'une alternative représente l'utilité opérationnelle associée à l'alternative, c'est-à-dire le niveau de plus-value qui sera apporté au système 100 si cette alternative est choisie pour la mise en oeuvre de la fonction de système demandée.

Le module de calcul de poids d'alternative 105 est configuré pour calculer le poids d'une alternative d'utilisation de capteurs sur le système 100 en prenant en compte les niveaux de priorité associés aux métriques de qualité $M_i$ spécifiées dans la demande opérationnelle.

Dans un mode de réalisation, le poids d'une alternative est compris entre une valeur de poids minimale et une valeur de poids maximale.

Le poids d'une alternative ainsi déterminé représente le poids d'utilité opérationnelle de l'alternative sur le système 100 pour l'exécution de la fonction de système, chacun au taux d'utilisation n et à la durée d associés pour répondre à la demande opérationnelle.

Dans un mode de réalisation, le module de calcul de poids d'alternative 105 est configuré pour calculer le poids d'une alternative $w_k$ en calculant, pour chaque métrique $M_i$, le produit scalaire entre la valeur prédite moyenne calculée pour le métrique de qualité et le niveau de priorité associé à la métrique de qualité dans la requête, et en sommant les produits scalaires pour toutes les métriques $M_i$, avec i = 1 à T, selon l'équation (1) :

$$w_k = \sum_{i=1}^{T}(Pi * Vi_k) \quad (1)$$

Dans l'équation (1), $Pi$ désigne le niveau de priorité et $Vi_k$ désigne la valeur prédite moyenne (encore appelée 'valeur prédite globale') pour chaque métrique de qualité $M_i$.

Dans un tel mode de réalisation, l'unité de présélection d'alternatives 10 est configurée pour délivrer les alternatives candidates déterminées par le module de sélection d'alternatives candidates 104 à l'unité de calcul d'indicateur d'impact 12, et pour délivrer à l'unité de sélection d'alternative optimale 14, les alternatives candidates sélectionnées, chacune associée au poids d'utilité calculé pour cette alternative.

Dans un tel mode de réalisation, l'unité de sélection d'alternative optimale 14 peut être configurée pour sélection l'alternative optimale $A_{opt}$ qui minimise le ratio $r_k$ entre l'indicateur d'impact de l'alternative $I_k$ et le poids d'utilité de l'alternative $w_k$ parmi les alternatives candidates ($r_k=I_k/w_k$), soit :

$$A_{opt} = \min_{k=1 \text{ à } L} r_k$$

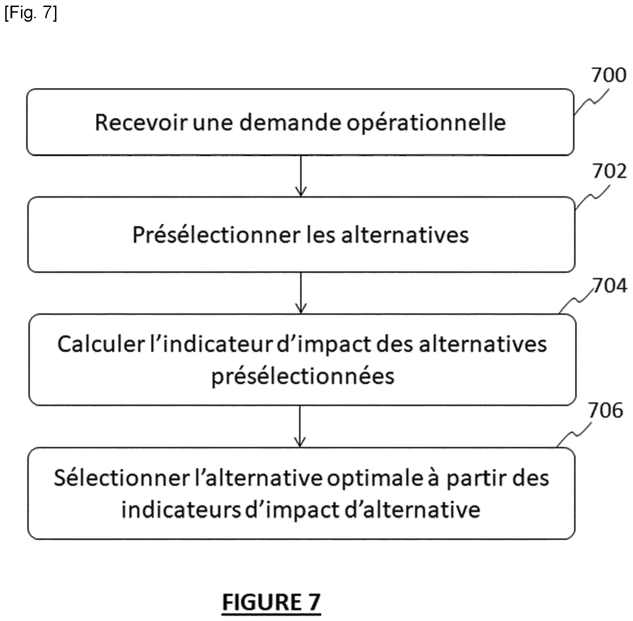

La figure 7 est un organigramme représentant le procédé de contrôle d'utilisation de capteurs selon des modes de réalisation de l'invention.

A l'étape 700, une demande opérationnelle est reçue, la demande opérationnelle comprenant un type de fonction de système à exécuter, au moins une métrique de qualité, chaque métrique de qualité étant associée à une valeur cible (valeur minimale de la métrique de qualité à satisfaire lors de la mise en oeuvre de la fonction de système). La demande opérationnelle représente une requête d'exécution de fonction de système (par exemple demande de fonction de détection) nécessitant des données issues de capteurs.

A l'étape 702, des alternatives de capteurs sont présélectionnées à partir d'alternatives extraites de la base de données de capteurs.

A l'étape 704, pour chaque alternative $A_k$ présélectionnée, un indicateur d'impact $I_k$ est calculé.

L'étape 704 peut comprendre, pour chaque alternative $A_k$, et pour chaque capteur de l'alternative, le calcul d'au moins deux facteurs relatifs à l'utilisation du capteur à partir de la durée associée au capteur et/ou du taux d'utilisation du capteur. Dans un mode de réalisation, les facteurs calculés pour chaque capteur comprennent :

- le facteur d'utilisation du capteur $f(d)$ ; et/ou

- le facteur de charge du capteur $F(n, C)$ ; et/ou

- le facteur de criticité du capteur $f_{crit}$.

A l'étape 706, une alternative optimale parmi les alternatives candidates présélectionnées est choisie en fonction des indicateurs d'impact calculés pour les alternatives. La fonction de système demandée dans la demande opérationnelle est mise en oeuvre en utilisant l'alternative choisie.

L'étape 702 peut comprendre une sélection d'alternatives candidates à partir de valeurs prédites des T métriques de qualité, spécifiées dans la demande opérationnelle, pour chaque capteurs des alternatives. L'étape 702 peut en outre comprendre, pour chaque alternative, un calcul d'une valeur prédite globale pour chaque métrique de qualité à partir des valeurs prédites pour la métrique de qualité pour les capteurs de l'alternative, la sélection des alternatives candidates étant effectuée à partir des valeurs prédites globales des T métriques de qualité obtenues pour chaque alternative. L'étape 702 peut aussi comprendre un filtrage des alternatives qui ne satisfont pas les valeurs cibles des métriques de qualité en comparant pour chaque alternative $A_k$ et pour chaque métrique de qualité $M_i$, la valeur prédite globale $Vi_k$ obtenue pour la métrique de qualité $M_i$ à la valeur cible de la métrique de qualité $Vi_{cible}$. Dans un mode de réalisation, l'étape 702 peut comprendre en outre une étape de calcul du poids d'utilité de chaque alternative à partir des valeurs prédites globales obtenues pour les différentes métriques pour l'alternative et de niveaux de priorité associés à chaque métrique. L'étape de présélection fournit alors les alternatives candidates et pour chaque alternative candidate le poids d'utilité associé. Dans un tel mode de réalisation, l'alternative optimale parmi les alternatives candidates présélectionnées est choisie en fonction des indicateurs d'impact calculés pour les alternatives et des poids d'utilité des alternatives. En particulier, l'alternative optimale parmi les alternatives candidates présélectionnées correspond à l'alternative qui minimise le ratio entre l'indicateur d"impact de l'alternative et le poids d'utilité de l'alternative.

Les modes de réalisation permettent de privilégier l'utilisation des ressources capteurs les moins critiques puis, lorsque ces ressources capteur commencent à être chargées, de commencer à utiliser les ressources capteurs les plus critiques afin d'éviter la saturation d'une ressource capteur non critique. En effet, si un capteur est « non critique », une saturation de ce capteur peut rendre impossible certaines actions. Ainsi les situations dans lesquelles le système 100 se retrouverait dans le cas où il serait dans l'incapacité de répondre à une demande peuvent être anticipées dynamiquement.

Dans les modes de réalisation utilisant un indicateur d'utilité, l'alternative optimale sélectionnée peut correspondre au ratio indicateur d'Impact/Indicateur d'Utilité minimal, un tel ratio permettant de représenter à quel point l'utilisation des capteurs 2 du système 100 permettent d'apporter une plus-value au système 100. Dans ce cas, un nombre de capteurs un peu plus important peut être utilisé (Impact supérieur) pour obtenir une utilité beaucoup plus forte.

Il est considéré un exemple d'application de l'invention à un système de détection de cible 100 et à une demande opérationnelle demandant une fonction de système de type « suivi de détection air ». Il est considéré dans cet exemple les deux alternatives suivantes :

- $A_1$ associé à un seul capteur $C_{1_1}$ de type radar pour effectuer un suivi Radar, avec n=15 % et d=0,1s (Utilisation de 15% du Radar pendant 0,1s) ; il est supposé que l'unité de présélection a calculé un indicateur d'utilité égal à 4.8 pour l'alternative $A_1$ ; et

- $A_2$ associé à un seul capteur $C_{1_2}$ de type Guerre Électronique pour effectuer un suivi Guerre Électronique, avec n=1 % et d=3s (Utilisation de 1% de la Guerre Électronique pendant 3s) ; il est supposé que l'unité de présélection a calculé un indicateur d'utilité égal à 3 pour l'alternative $A_2$.

Il est considéré deux situations tactiques différentes S1 et S2. Dans les deux situations, il est considéré un grand nombre de détections à portée du capteur Radar $C_{1_1}$, et que la criticité de ce capteur $C_{1_1}$ est estimée élevée dans les deux situations ($f_{crit}$ =80 pour le capteur $C_{1_1}$).

Pour le deuxième capteur $C_{1_2}$ (Guerre Électronique) :

- Dans la première situation S1, il est considéré qu'il n'y a qu'une seule détection hostile. La criticité de la Guerre Électronique est donc estimée faible ($f_{crit}$ =20 pour le capteur $C_{1_2}$) ; et
- Dans la deuxième situation S2, il est supposé qu'il y a un grand nombre de détections hostiles. La criticité du deuxième capteur $C_{1_2}$ (Guerre Électronique) est donc estimée élevée (80).

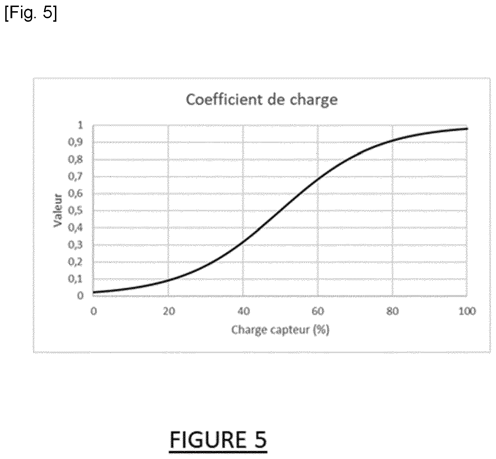

La fonction représentant le coefficient de charge d'un capteur *coef(x)* peut être définie par l'équation d'une courbe en « S », comme représenté sur la figure 5.

Une courbe en « S » est donnée par l'équation suivante :

$$coef(x) = 1 \Big/ (1 + 10^{50-x/30}) \quad (2)$$

Cependant, l'homme du métier comprendra aisément que l'invention n'est pas limitée à un coefficient de charge défini par une courbe en « S ». En variante, le coefficient de charge peut être défini par d'autre type de courbe, comme par exemple et sans limitation :

- Une courbe linéaire définie par l'équation :

$$coef(x) = {}^{x}\!/100 \quad (3) ;$$

- Une courbe logarithmique définie par l'équation :

$$coef(x) = 1 - 10^{-x/60} \quad (4); \text{ et}$$

- Une courbe de puissance définie par l'équation :

$$coef(x) = ({}^{x}\!/100)^5 \quad (5).$$

Il est supposé en outre que pour le calcul du facteur de durée *f(d)*, la constante d'utilisation *K* est donnée par *K* = 1.

Il est en outre considéré trois exemples de conditions de charge des capteurs :

- Cas 1 : dans la Situation tactique S1, il est supposé que les capteurs $C_1$ (Radar) et $C_{1_2}$ (Guerre Électronique) sont chargés à *C*=70% ;

- Cas 2 : dans la Situation tactique S1, il est supposé que le capteur $C_{1_1}$ (Radar) est chargé à *C*=20% et que le capteur $C_{1_2}$ (Guerre Électronique) est chargé à *C*= 70% ; et

- Cas 3 : dans la Situation tactique S2, il est supposé que les capteurs $C_{1_1}$ (Radar) et $C_{1_2}$ (Guerre Électronique) sont chargés à *C*=70%.

Dans le cas 1, pour l'alternative $A_1$:

- le Facteur de charge *F*(15%, 70%) ~ 13.3

- L'indicateur d'impact $I_1$ de l'alternative $A_1$ est

$$I_1 = 0.1 * 13.3 * 80 = 106.4$$

- Le ratio Indicateur Impact/Indicateur Utilité $r_1$ est égale à :

$$r_1 = 106.4/4.8 = 22.2$$

Dans le cas 1, pour l'alternative $A_2$:

- Le Facteur de charge *F*(1%, 70%) ~ 0.8
- L'indicateur d'impact $I_2$ de l'alternative $A_2$ est

$$I_2 = 3 * 0.8 * 20 = 48$$

- Le ratio Indicateur Impact/Indicateur Utilité $r_2$ est égale à :

$$r_2 = 48/3 \; = \; 16$$

Dans le cas 1, l'unité de sélection 14 peut alors sélectionner l'alternative $A_2$ en tant qu'alternative optimale $A_{opt}$ qui a le ratio le plus petit, celle-ci favorisant l'utilisation des ressources du capteur le moins critique et ce malgré un indicateur d'utilité inférieur.

Dans le cas 2, pour l'alternative $A_1$ :

- Le Facteur de charge $F$(15%, 20%) ~ 2.3
- L'indicateur d'impact $I_1$ de l'alternative $A_1$ est

$$I_1 = 0.1 * 2.3 * 80 = 18.4$$

- Le ratio Indicateur Impact/Indicateur Utilité $r_1$ est égale à :

$$r_1 = 18,4/4.8 = 3.8$$

Dans le cas 2, pour l'alternative $A_2$ :

- Le Facteur de charge $F$(1%, 70%) ~ 0.8
- L'indicateur d'impact $I_2$ de l'alternative $A_2$ est

$$I_2 = 3 * 0.8 * 20 = 48$$

- Le ratio Indicateur Impact/Indicateur Utilité $r_2$ est égale à :

$$r_2 = 48/3 = 16$$

Dans le cas 2, l'unité de sélection 14 peut alors sélectionner l'alternative $A_1$ en tant qu'alternative optimale $A_{opt}$ qui a le ratio minimum, celle-ci favorisant l'utilisation des ressources du capteur le moins chargé même s'il est à priori plus critique, et ayant en plus le meilleur indicateur d'utilité.

Dans le cas 3, pour l'alternative $A_1$ :

- le Facteur de charge $F$(15%, 70%) ~ 13.3

- L'indicateur d'impact $I_1$ de l'alternative $A_1$ est

$$I_1 = 0.1 * 13.3 * 80 = 106.4$$

- Le ratio Indicateur Impact/Indicateur Utilité $r_1$ est égale à :

$$r_1 = 106.4/4.8 \; = \; 22.2$$

Dans le cas 3, pour l'alternative $A_2$ :

- le Facteur de charge $F$(1%, 70%) ~ 0.8
- L'indicateur d'impact $I_2$ de l'alternative $A_2$ est

$$I_2 = 3 * 0.8 * 80 = 192$$

- Le ratio Indicateur Impact/Indicateur Utilité $r_2$ est égale à :

$$r_2 = 192/3 \; = \; 64$$

Dans le cas 3, l'unité de sélection 14 peut alors sélectionner l'alternative $A_1$ en tant qu'alternative optimale $A_{opt}$ qui a le ratio minimum. Les deux capteurs étant de criticité et de charge équivalente, la solution qui demande le moins de charge dans le système (15% pendant 0,1s par rapport à 1% pendant 3s) et a en plus la meilleure utilité est privilégiée.

Il convient de noter que si l'utilité de l'alternative $A_1$ (Suivi Radar) avait été calculée à 1, le ratio r aurait été de 106.4 pour cette alternative et l'alternative retenue aurait donc été l'alternative $A_2$(Suivi Guerre Électronique), l'apport d'utilité supplémentaire étant suffisant pour compenser l'impact opérationnel supérieur de la solution (la solution minimisant le ratio r).

Le dispositif de contrôle 1 selon les modes de réalisation de l'invention permet au système 100 d'arbitrer dynamiquement entre différentes alternatives l'utilisation des ressources capteurs 2 du système. Il permet par exemple d'arbitrer :

- entre des alternatives d'utilisation de capteur qui occupent beaucoup de ressources d'un capteur non critique par rapport à celle qui utilisent peu de ressources d'un capteur critique ; et

- entre des alternatives apportant peu de plus-value opérationnelle au système 100, mais ayant un impact faible sur les ressources, et des alternatives une plus-value opérationnelle très forte, mais avec un impact sur le système plus important.

À chaque réception d'une demande opérationnelle, le dispositif de contrôle d'utilisation selon les modes de réalisation de l'invention permet de déterminer les alternatives de capteurs qui permettent de répondre à la demande opérationnelle et l'impact sur les capacités futures du système de chacune des alternatives afin de choisir l'alternative optimale.

Les modes de réalisation de l'invention fournissent ainsi un dispositif et un procédé de contrôle des ressources capteurs capable d'optimiser l'utilisation des ressources capteurs du système multi-capteur 100. Ils permettent d'ajuster dynamiquement et en temps réel l'utilisation des ressources capteurs par le système parmi les ressources capteurs disponibles. Ils permettent ainsi de fournir une réponse optimisée aux demandes opérationnelles de ressources capteurs, tout en conservant la possibilité de répondre le mieux possible aux demandes de ressources capteurs ultérieures qui pourraient être reçues.

L'homme du métier comprendra que le dispositif de contrôle d'utilisation des capteurs 1 ou des sous-systèmes du dispositif 1 selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée aux types de systèmes multi-capteurs 100 cités dans la description à titre d'exemple non limitatif. L'invention n'est pas non plus limitée aux fonctions de coefficient *coef(x)* ni aux métriques de qualité citées également à titre d'exemple non limitatif dans la description.

**Revendications**

1. Dispositif de contrôle (1) d'utilisation de capteurs d'un système (100), le système étant équipé d'au moins deux capteurs, le système étant apte à exécuter une ou plusieurs fonctions de système, **caractérisé en ce que** le dispositif (1) comprend :

- une unité de présélection d'alternatives d'utilisations de capteurs (10) configurée pour présélectionner un ensemble d'alternatives d'utilisation de capteurs à partir d'alternatives d'utilisation de capteurs stockées dans une base de données d'alternatives (5), en réponse à la réception d'une requête indiquant un type de fonction du système et au moins une métrique de qualité, chaque alternative étant stockée dans la base de données d'alternatives (5) en correspondance avec une fonction de système, chaque alternative étant associée à au moins un capteur et comprenant pour chaque capteur associé, un taux d'utilisation du capteur et une durée d'utilisation du capteur audit taux d'utilisation, l'unité de présélection étant configurée pour extraire les alternatives d'utilisation de capteurs associée à ladite fonction de système de la base de données ;
- une unité de calcul d'indicateur d'impact d'alternative (12) configurée pour calculer un indicateur d'impact d'alternative pour chaque alternative présélectionnée, ledit indicateur d'impact représentant l'impact de l'utilisation de chaque capteur de l'alternative, au taux d'utilisation et pendant la durée associés au capteur dans l'alternative d'utilisation de capteurs, pour répondre à la fonction de système spécifiée dans la requête ; et
- une unité de sélection d'alternative (14) configurée pour sélectionner une alternative parmi lesdites alternatives en fonction de l'indicateur d'impact déterminé pour chaque alternative.

2. Dispositif de contrôle d'utilisation de capteurs selon la revendication 1, **caractérisé en ce que** l'unité de calcul d'indicateur d'impact d'alternative comprend une unité de calcul d'indicateur d'impact élémentaire (121) configurée pour calculer pour chaque capteur de l'alternative, un indicateur d'impact élémentaire représentant l'impact de l'utilisation du capteur de l'alternative, au taux d'utilisation et pendant la durée associés au capteur, pour répondre à la fonction de système spécifiée dans la requête, l'unité de calcul de l'indicateur d'impact d'alternative comprenant en outre un additionneur (121) configuré pour additionner les indicateurs d'impact élémentaires calculés pour tous les capteurs de l'alternative, ce qui fournit l'indicateur d'impact d'utilisation de l'alternative.

3. Dispositif de contrôle d'utilisation de capteurs selon la revendication 2, **caractérisé en ce que** l'unité de calcul d'indicateur d'impact d'alternative (120) est configurée pour calculer au moins deux facteurs relatifs à l'utilisation du capteur à partir de la durée associée au capteur et/ou du taux d'utilisation du capteur, l'unité de calcul comprenant un multiplicateur pour calculer le produit desdits facteurs, ce qui fournit ledit indicateur d'impact élémentaire du capteur.

**4.** Dispositif de contrôle d'utilisation de capteurs selon la revendication 3, **caractérisé en ce que** l'unité de calcul d'indicateur d'impact d'alternative (120) comprend une unité de calcul de facteur de durée d'utilisation (1200) configurée pour calculer un facteur de durée d'utilisation du capteur à partir de la durée d'utilisation associée au capteur dans l'alternative.

**5.** Dispositif de contrôle d'utilisation de capteurs selon la revendication 4, **caractérisé en ce que** l'unité de calcul de facteur de durée d'utilisation (1200) est configurée pour calculer le facteur de durée d'utilisation du capteur comme étant égal au produit de la durée d'utilisation associée au capteur dans l'alternative et d'une constante, la constante étant identique pour tous les capteurs de l'alternative associée au capteur.

**6.** Dispositif de contrôle d'utilisation de capteurs selon l'une des revendications 3 à 5, **caractérisé en ce que** l'unité de calcul d'indicateur d'impact élémentaire (120) comprend une unité de calcul de facteur de charge de capteur (1201) configurée pour calculer un facteur de charge du capteur à partir d'un coefficient de charge du capteur et du taux d'utilisation associé au capteur (2) dans l'alternative.

**7.** Dispositif de contrôle d'utilisation de capteurs selon la revendication 6, **caractérisé en ce que** l'unité de calcul de facteur de charge du capteur (1201) est configurée pour calculer le facteur de charge du capteur $F(n, C)$ selon l'équation :

$$F(n,C) = \int_{x=0}^{n} coef(C + x)$$

C désignant le coefficient de charge du capteur, $n$ désignant le taux d'utilisation associé au capteur (2) dans l'alternative, et $coef()$ désignant une fonction représentant le coefficient de charge d'un capteur.

**8.** Dispositif de contrôle d'utilisation de capteurs selon l'une des revendications 3 à 7, **caractérisé en ce que** la durée d'utilisation du capteur est définie à partir d'une date t, et **en ce que** l'unité de calcul d'indicateur d'impact élémentaire (120) comprend une unité de calcul de criticité de capteur (1202) configurée pour calculer un facteur de criticité du capteur représentant une valeur prédite de la criticité du capteur à la date t en fonction de l'état de l'environnement du capteur à la date t.

**9.** Dispositif de contrôle d'utilisation de capteurs selon la revendication 8, **caractérisé en ce que** l'unité de calcul de criticité de capteur est configurée pour calculer le facteur de criticité du capteur (1202) en utilisant une technique d'analyse de l'environnement du capteur estimé à la date t, le facteur de criticité du capteur représentant une probabilité d'utilisation de la ressource au vu de l'état de l'environnement du capteur à l'instant t, le facteur de criticité étant une valeur comprise entre une valeur minimale de criticité indiquant que le capteur est une ressource optionnelle et une valeur maximale de criticité indiquant que le capteur représente une ressource nécessaire.

**10.** Dispositif de contrôle d'utilisation de capteurs selon la revendication 9, **caractérisé en ce que** ladite technique d'analyse est basée sur une logique booléenne ou une technique à base d'intelligence artificielle.

**11.** Dispositif de contrôle d'utilisation de capteurs selon l'une des revendications précédentes, **caractérisé en ce que** l'unité de sélection d'alternative (14) est configurée pour sélectionner l'alternative qui minimise l'indicateur d'impact parmi les alternatives présélectionnées.

**12.** Dispositif de contrôle de l'utilisation de capteurs selon l'une des revendications précédentes, **caractérisé en ce que** chaque métrique de qualité spécifiée dans la requête est associée à un niveau de priorité.

**13.** Dispositif de contrôle d'utilisation de capteurs selon la revendication 12, **caractérisé en ce qu'**il comprend un module de calcul de poids d'utilité configuré pour calculer, pour chaque alternative présélectionnée, un poids d'utilité à partir des niveaux de priorité associés à chaque métrique de qualité spécifiée dans la requête et de valeurs prédites desdites métriques de qualité calculées pour l'alternative, et **en ce que** l'unité de sélection d'alternative (14) est configurée pour sélectionner l'alternative qui minimise le ratio entre l'indicateur d'impact d'une alternative et le poids d'utilité de l'alternative, parmi les alternatives présélectionnées.

**14.** Procédé de contrôle (1) d'utilisation de capteurs d'un système (100), le système étant équipé d'au moins deux capteurs, le système étant apte à exécuter une ou plusieurs fonctions de système, **caractérisé en ce que** le procédé comprend les étapes consistant à :

- présélectionner (702) un ensemble d'alternatives d'utilisation de capteurs à partir d'alternatives d'utilisation de capteurs stockées dans une base de données d'alternatives (3), en réponse à la réception d'une requête indiquant un type de fonction du système et au moins une métrique de qualité, chaque alternative étant stockée dans la base de données d'alternatives (5) en correspondance avec une fonction de système, chaque alternative étant associée à au moins un capteur et comprenant pour chaque capteur associé, un taux d'utilisation du capteur et une durée d'utilisation du capteur audit taux d'utilisation, l'étape de présélection comprenant une extraction des alternatives d'utilisation de capteurs associée à ladite fonction de système dans la base de données ;

- calculer un indicateur d'impact d'alternative (704) pour chaque alternative présélectionnée, ledit indicateur d'impact représentant l'impact de l'utilisation de chaque capteur de l'alternative, au taux d'utilisation et pendant la durée associés au capteur dans l'alternative de capteur, pour répondre à la fonction de système spécifiée dans la requête ; et

- sélectionner (706) une alternative parmi lesdites alternatives en fonction de l'indicateur d'impact déterminé pour chaque alternative.

**Patentansprüche**

1. Vorrichtung (1) zum Steuern der Nutzung von Sensoren eines Systems (100), wobei das System mit mindestens zwei Sensoren ausgestattet ist, wobei das System eine oder mehrere Systemfunktionen ausführen kann, **dadurch gekennzeichnet, dass** die Vorrichtung (1) Folgendes umfasst:

- eine Sensornutzungsalternativen-Vorauswahleinheit (10), konfiguriert zum Vorauswählen eines Satzes von Sensornutzungsalternativen auf der Basis von in einer Alternativen-Datenbank (5) gespeicherten Sensornutzungsalternativen als Reaktion auf den Empfang einer Anforderung, die einen Funktionstyp des Systems und mindestens eine Qualitätsmetrik angibt, wobei jede Alternative in der Alternativen-Datenbank (5) entsprechend einer Systemfunktion gespeichert ist, wobei jede Alternative mit mindestens einem Sensor assoziiert ist und für jeden assoziierten Sensor eine Nutzungsrate des Sensors und eine Nutzungsdauer des Sensors bei dem Nutzungsgrad umfasst, wobei die Vorauswahleinheit zum Extrahieren der mit der Systemfunktion assoziierten Sensornutzungsalternativen aus der Datenbank konfiguriert ist;

- eine Alternativenauswirkungsindikator-Berechnungseinheit (12), konfiguriert zum Berechnen eines Alternativenauswirkungsindikators für jede vorausgewählte Alternative, wobei der Auswirkungsindikator die Auswirkung der Nutzung jedes Sensors der Alternative bei der Nutzungsrate und während der Dauer in Assoziation mit dem Sensor in der Sensornutzungsalternative darstellt, um die in der Anforderung spezifizierte Systemfunktion zu erfüllen; und

- eine Alternativenauswahleinheit (14), konfiguriert zum Auswählen einer Alternative aus den Alternativen in Abhängigkeit von dem für jede Alternative bestimmten Auswirkungsindikator.

2. Vorrichtung zum Steuern der Nutzung von Sensoren nach Anspruch 1, **dadurch gekennzeichnet, dass** die Alternativenauswirkungsindikator-Berechnungseinheit eine Elementarer-Auswirkungsindikator-Berechnungseinheit (121) umfasst, konfiguriert zum Berechnen, für jeden Sensor der Alternative, eines elementaren Auswirkungsindikators, der die Auswirkung der Nutzung des Sensors der Alternative bei der Nutzungsrate und während der Dauer, die mit dem Sensor assoziiert sind, darstellt, um auf die in der Anforderung spezifizierte Systemfunktion zu reagieren, wobei die Berechnungseinheit für den Alternativenauswirkungsindikator ferner einen Addierer (121) umfasst, der zum Addieren der für alle Sensoren der Alternative berechneten elementaren Auswirkungsindikatoren konfiguriert ist, wodurch der Indikator der Auswirkung der Nutzung der Alternative bereitgestellt wird.

3. Vorrichtung zum Steuern der Nutzung von Sensoren nach Anspruch 2, **dadurch gekennzeichnet, dass** die Alternativenauswirkungsindikator-Berechnungseinheit (120) zum Berechnen von mindestens zwei Faktoren bezüglich der Nutzung des Sensors auf der Basis der mit dem Sensor assoziierten Dauer und/oder der Nutzungsrate des Sensors konfiguriert ist, wobei die Berechnungseinheit einen Multiplikator zum Berechnen des Produkts der Faktoren umfasst, wodurch der elementare Auswirkungsindikator des Sensors bereitgestellt wird.

4. Vorrichtung zum Steuern der Nutzung von Sensoren nach Anspruch 3, **dadurch gekennzeichnet, dass** die Alternativenauswirkungsindikator-Berechnungseinheit (120) eine Nutzungsdauerfaktor-Berechnungseinheit (1200) umfasst, die zum Berechnen eines Nutzungsdauerfaktors des Sensors auf der Basis der mit dem Sensor in der Alternative assoziierten Nutzungsdauer konfiguriert ist.

5. Vorrichtung zum Steuern der Nutzung von Sensoren nach Anspruch 4, **dadurch gekennzeichnet, dass** die Nutzungsdauerfaktor-Berechnungseinheit (1200) zum Berechnen des Nutzungsdauerfaktors des Sensors als gleich dem Produkt aus der mit dem Sensor in der Alternative assoziierten Nutzungsdauer und einer Konstante konfiguriert ist, wobei die Konstante für alle Sensoren in der mit dem Sensor assoziierten Alternative identisch ist.

6. Vorrichtung zum Steuern der Nutzung von Sensoren nach einem der Ansprüche 3 bis 5, **dadurch gekennzeichnet, dass** die Elementarer-Auswirkungsindikator-Berechnungseinheit (120) eine Sensorlastfaktor-Berechnungseinheit (1201) umfasst, die zum Berechnen eines Lastfaktors des Sensors auf der Basis eines Lastkoeffizienten des Sensors und der mit dem Sensor (2) in der Alternative assoziierten Nutzungsrate konfiguriert ist.

7. Vorrichtung zum Steuern der Nutzung von Sensoren nach Anspruch 6, **dadurch gekennzeichnet, dass** die Sensorlastfaktor-Berechnungseinheit (1201) konfiguriert ist zum Berechnen des Sensorlastfaktors $F(n, C)$ gemäß der Gleichung:

$$F(n, C) = \int_{x=0}^{n} coef(C + x) ,$$

wobei $C$ den Lastkoeffizienten des Sensors bezeichnet, $n$ den mit dem Sensor (2) in der Alternative assoziierten Nutzungsgrad bezeichnet und $coef()$ eine den Lastkoeffizienten eines Sensors darstellende Funktion bezeichnet.

8. Vorrichtung zum Steuern der Nutzung von Sensoren nach einem der Ansprüche 3 bis 7, **dadurch gekennzeichnet, dass** die Nutzungsdauer des Sensors ab einem Zeitpunkt t definiert ist, und dadurch, dass die Elementarer-Auswirkungsindikator-Berechnungseinheit (120) eine Sensorkritikalitäts-Berechnungseinheit (1202) umfasst, die zum Berechnen eines Kritikalitätsfaktors des Sensors konfiguriert ist, der einen Vorhersagewert der Kritikalität des Sensors zum Zeitpunkt t in Abhängigkeit vom Zustand der Umgebung des Sensors zum Zeitpunkt t darstellt.

9. Vorrichtung zum Steuern der Nutzung von Sensoren nach Anspruch 8, **dadurch gekennzeichnet, dass** die Sensorkritikalitäts-Berechnungseinheit zum Berechnen des Kritikalitätsfaktor des Sensors (1202) mittels einer Technik zum Analysieren der zum Zeitpunkt t geschätzten Umgebung des Sensors konfiguriert ist, wobei der Kritikalitätsfaktor des Sensors eine Wahrscheinlichkeit für die Nutzung der Ressource angesichts des Zustands der Umgebung des Sensors zum Zeitpunkt t darstellt, wobei der Kritikalitätsfaktor ein Wert zwischen einem minimalen Kritikalitätswert, der angibt, dass der Sensor eine optionale Ressource ist, und einem maximalen Kritikalitätswert ist, der angibt, dass der Sensor eine notwendige Ressource darstellt.

10. Vorrichtung zum Steuern der Nutzung von Sensoren nach Anspruch 9, **dadurch gekennzeichnet, dass** die Analysetechnik auf einer Booleschen Logik oder einer auf künstlicher Intelligenz basierenden Technik basiert.

11. Vorrichtung zum Steuern der Nutzung von Sensoren nach einem der vorhergehenden Ansprüche, **dadurch gekennzeichnet, dass** die Alternativenauswahleinheit (14) zum Auswählen der Alternative aus den vorausgewählten Alternativen konfiguriert ist, die den Auswirkungsindikator minimiert.

12. Vorrichtung zum Steuern der Nutzung von Sensoren nach einem der vorhergehenden Ansprüche, **dadurch gekennzeichnet, dass** jede in der Anforderung spezifizierte Qualitätsmetrik mit einer Prioritätsstufe assoziiert ist.

13. Vorrichtung zum Steuern der Nutzung von Sensoren nach Anspruch 12, **dadurch gekennzeichnet, dass** sie ein Nutzungsgewichtungs-Berechnungsmodul umfasst, konfiguriert zum Berechnen, für jede vorausgewählte Alternative, einer Nutzungsgewichtung auf der Basis der mit jeder in der Anforderung angegebenen Qualitätsmetrik assoziierten Prioritätsstufe und von Vorhersagewerten der für die Alternative berechneten Qualitätsmetriken, und dadurch, dass die Alternativenauswahleinheit (14) zum Auswählen der Alternative, die das Verhältnis zwischen dem Auswirkungsindikator einer Alternative und der Nutzungsgewichtung der Alternative minimiert, aus den vorausgewählten Alternativen konfiguriert ist.

14. Verfahren zum Steuern (1) der Nutzung von Sensoren eines Systems (100), wobei das System mit mindestens zwei Sensoren ausgestattet ist, wobei das System eine oder mehrere Systemfunktionen ausführen kann, **dadurch gekennzeichnet, dass** das Verfahren die folgenden Schritte umfasst:

- Vorauswählen (702) eines Satzes von Sensornutzungsalternativen auf der Basis von in einer Alternativen-Datenbank (3) gespeicherten Sensornutzungsalternativen als Reaktion auf den Empfang einer Anforderung, die einen Funktionstyp des Systems und mindestens eine Qualitätsmetrik angibt, wobei jede Alternative in der Alternativen-Datenbank (5) entsprechend einer Systemfunktion gespeichert ist, wobei jede Alternative mit mindestens einem Sensor assoziiert ist und für jeden assoziierten Sensor eine Nutzungsrate des Sensors und eine Nutzungsdauer des Sensors bei der Nutzungsrate umfasst, wobei der Vorauswahlschritt eine Extraktion der mit der Systemfunktion assoziierten Sensornutzungsalternativen aus der Datenbank umfasst;
- Berechnen (704) eines Alternativenauswirkungsindikators für jede vorausgewählte Alternative, wobei der Auswirkungsindikator die Auswirkung der Nutzung jedes Sensors in der Alternative bei der Nutzungsrate und während der Dauer in Assoziation mit dem Sensor in der Sensoralternative darstellt, um die in der Anforderung spezifizierte Systemfunktion zu erfüllen, und

- Auswählen (706) einer Alternative aus den Alternativen in Abhängigkeit von dem für jede Alternative bestimmten Auswirkungsindikator.

**Claims**

1. A device (1) for controlling the use of sensors of a system (100), the system being equipped with at least two sensors, the system being able to execute one or more system functions, **characterised in that** the device (1) comprises:

   - a unit (10) for pre-selecting alternatives for uses of sensors configured to pre-select a set of sensors use alternatives from sensors use alternatives stored in a database (5) of alternatives, in response to receiving a request indicating a type of function of the system and at least one quality metric, each alternative being stored in the database (5) of alternatives in correspondence with a system function, each alternative being associated with at least one sensor and comprising, for each associated sensor, a rate of use of the sensor and a duration of use of the sensor at said rate of use, the pre-selection unit being configured to extract the sensors use alternatives associated with said system function from the database;
   - a unit (12) for computing an alternative impact indicator configured to compute an alternative impact indicator for each pre-selected alternative, said impact indicator representing the impact of the use of each sensor of the alternative, at the rate of use and for the duration associated with the sensor in the sensors use alternative, in order to respond to the system function specified in the request; and
   - a unit (14) for selecting an alternative configured to select an alternative from among said alternatives as a function of the impact indicator determined for each alternative.

2. The device for controlling the use of sensors according to claim 1, **characterised in that** the unit for computing an alternative impact indicator comprises a unit (121) for computing an elementary impact indicator configured to compute, for each sensor of the alternative, an elementary impact indicator representing the impact of the use of the sensor of the alternative, at the rate of use and for the duration which are associated with the sensor, to respond to the system function specified in the request, the unit for computing the alternative impact indicator further comprising an adder (121) configured to add the elementary impact indicators computed for all the sensors of the alternative, which provides the indicator of the impact of using the alternative.

3. The device for controlling the use of sensors according to claim 2, **characterised in that** the unit (120) for computing an alternative impact indicator is configured to compute at least two factors relating to the use of the sensor from the duration associated with the sensor and/or the rate of use of the sensor, the computation unit comprising a multiplier for computing the product of said factors, which provides said elementary impact indicator of the sensor.

4. The device for controlling the use of sensors according to claim 3, **characterised in that** the unit (120) for computing an alternative impact indicator comprises a unit (1200) for computing a duration of use factor configured to compute a duration of use factor of the sensor from the duration of use associated with the sensor in the alternative.

5. The device for controlling the use of sensors according to claim 4, **characterised in that** the unit (1200) for computing a duration of use factor is configured to compute the duration of use factor of the sensor as being equal to the product of the duration of use associated with the sensor in the alternative and of a constant, the constant being identical for all the sensors of the alternative associated with the sensor.

6. The device for controlling the use of sensors according to one of claims 3 to 5, **characterised in that** the unit (120) for computing an elementary impact indicator comprises a unit (1201) for computing a sensor load factor configured to compute a load factor of the sensor from a load coefficient of the sensor and from the rate of use associated with the sensor (2) in the alternative.

7. The device for controlling the use of sensors according to claim 6, **characterised in that** the unit (1201) for computing a sensor load factor is configured to compute the load factor $F(n, C)$ of the sensor according to the following equation:

$$F(n, C) = \int_{x=0}^{n} coef(C + x)$$
,

with $C$ denoting the load coefficient of the sensor, $n$

denoting the rate of use associated with the sensor (2) in the alternative, and *coef()* denoting a function representing the load coefficient of a sensor.

8. The device for controlling the use of sensors according to one of claims 3 to 7, **characterised in that** the duration of use of the sensor is defined from a time t, and **in that** the unit (120) for computing an elementary impact indicator comprises a unit (1202) for computing sensor criticality configured to compute a criticality factor of the sensor representing a predicted value of the criticality of the sensor at the time t as a function of the state of the environment of the sensor at the time t.

9. The device for controlling the use of sensors according to claim 8, **characterised in that** the unit for computing sensor criticality is configured to compute the criticality factor of the sensor (1202) using a technique for analysing the environment of the sensor as estimated at the time t, the criticality factor of the sensor representing a probability of using the resource in view of the state of the environment of the sensor at the time t, the criticality factor being a value ranging between a minimum criticality value indicating that the sensor is an optional resource and a maximum criticality value indicating that the sensor represents a necessary resource.

10. The device for controlling the use of sensors according to claim 9, **characterised in that** said analysis technique is based on a Boolean logic or on an artificial intelligence based technique.

11. The device for controlling the use of sensors according to one of the preceding claims, **characterised in that** the alternative selection unit (14) is configured to select the alternative that minimises the impact indicator from among the pre-selected alternatives.

12. The device for controlling the use of sensors according to one of the preceding claims, **characterised in that** each quality metric specified in the request is associated with a priority level.

13. The device for controlling the use of sensors according to claim 12, **characterised in that** it comprises a module for computing utility weight configured to compute, for each pre-selected alternative, a utility weight from priority levels associated with each quality metric specified in the request and from predicted values of said quality metrics computed for the alternative, and **in that** the alternative selection unit (14) is configured to select the alternative that minimises the ratio between the impact indicator of an alternative and the utility weight of the alternative, from among the pre-selected alternatives.

14. A method (1) for controlling the use of sensors of a system (100), the system being equipped with at least two sensors, the system being able to execute one or more system functions, **characterised in that** the method comprises the following steps of:

- pre-selecting (702) a set of alternatives for use of sensors from sensors use alternatives stored in a database (3) of alternatives, in response to receiving a request indicating a type of function of the system and at least one quality metric, with each alternative being stored in the database (5) of alternatives in correspondence with a system function, each alternative being associated with at least one sensor and comprising, for each associated sensor, a rate of use of the sensor and a duration of use of the sensor at said rate of use, the pre-selection step comprising extracting sensors use alternatives associated with said system function from the database;
- computing (704) an alternative impact indicator for each pre-selected alternative, said impact indicator representing the impact of the use of each sensor of the alternative, at the rate of use and for the duration associated with the sensor in the sensor alternative, to respond to the system function specified in the request; and
- selecting (706) an alternative from among said alternatives as a function of the impact indicator determined for each alternative.

[Fig. 1]

FIGURE 1

[Fig. 2]

**100**

Unité de présélection d'alternatives

Unité de calcul d'indicateur d'impact

Unité de sélection d'alternative optimale

FIGURE 2

[Fig. 3]

12

alternatives
présélectionnées

| Unité de calcul de scores d'impact élémentaire de capteur | Additionneur |

120

121

FIGURE 3

[Fig. 4]

FIGURE 4

[Fig. 5]

FIGURE 5

[Fig. 6]

FIGURE 6

[Fig. 7]

700

Recevoir une demande opérationnelle

702

Présélectionner les alternatives

704

Calculer l'indicateur d'impact des alternatives présélectionnées

706

Sélectionner l'alternative optimale à partir des indicateurs d'impact d'alternative

**FIGURE 7**

24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017092220 A

- EP 3331817 A

**Littérature non-brevet citée dans la description**

- **KLEMM, RICHARD ; GRIFFITHS, HUGH ; KOCH, WOLFGANG.** Waveform diversity and cognitive radar, and target tracking and data fusion Herts: SciTech Publishing. *Novel radar techniques and applications,* 2017, vol. 2

- **ALLAN DE FREITAS et al.** Response Surface Modeling for Networked Radar Resource Allocation. *21 st International Conférence on Information Fusion,* 10 Juillet 1998